# EUROPEAN PATENT SPECIFICATION

(11) **EP 1 448 068 B1**
(45) Date of publication and mention of the grant of the patent: **13.06.2007**
(21) Application number: 02793966.9
(22) Date of filing: 19.11.2002
(51) Int. Cl.: A23L 3/3418, A23L 3/3445, A23B 7/148, A23B 7/152

(54) **PACKAGING OF RESPIRING BIOLOGICAL MATERIALS**
VERPACKEN VON SAUERSTOFF VERBRAUCHENDEM BIOLOGISCHEM MATERIAL
CONDITIONNMENT DE MATERIAUX BIOLOGIQUES RESPIRANTS

(30) Priority: 20.11.2001 US 989682
(43) Date of publication of application: 25.08.2004
(73) Proprietor: LANDEC CORPORATION, Menlo Park California 94025 (US)
(72) Inventor: CLARKE, Raymond, Los Altos, CA 94024 (US)
(74) Representative: Hall, Robert Leonard
(86) International application number: PCT/US2002/037199
(87) International publication number: WO 2003/043447

(56) References cited:
- WO-A-95/00030
- US-A- 2 278 571
- US-A- 3 450 542
- US-A- 3 450 544
- US-A- 3 681 092
- US-A- 3 798 333
- US-A- 5 460 841
- US-A- 5 658 607
- US-A- 5 667 827
- US-A- 5 711 978
- US-A- 5 799 495
- US-A- 5 811 142
- US-A- 5 916 614
- US-A1- 2002 090 425
- US-A1- 2002 127 305

## Description

This invention relates to the packaging of respiring biological materials.

Respiring biological materials, e.g. fruits and vegetables, consume oxygen (O₂) and produce carbon dioxide (CO₂) at rates which depend upon the stage of their development, the atmosphere surrounding them and the temperature. In modified atmosphere packaging (MAP), the objective is to produce a desired atmosphere around respiring materials by placing them in a sealed container whose permeability to O₂ and CO₂ is correlated with (i) the partial pressures of O₂ and CO₂ in the air outside the package, and (ii) the temperature, to produce a desired atmosphere within the container. In many cases, the container includes an atmosphere control member having a high permeability to O₂ and CO₂. In controlled atmosphere packaging (CAP), the objective is to produce a desired atmosphere around respiring materials by displacing some or all of the air within a container by one or more gases, e.g. nitrogen, O₂, CO₂ and ethylene, in desired proportions. Reference may be made, for example, to U.S. Patent Nos. 3,360,380 (Bedrosian), 3,450,542 (Badran), 3,450,544 (Badran et al.), 3,798,333 (Cummin et al), 3,924,010 (Erb), 4,003,728 (Rath), 4,734,324 (Hill), 4,779,524 (Wade), 4,830,863 (Jones), 4,842,875 (Anderson), 4,879,078 (Antoon), 4,910,032 (Antoon), 4,923,703 (Antoon), 4,987,745 (Harris), 5,041,290 (Wallace et al.) 5,045,331 (Antoon), 5,063,753 (Woodruff), 5,160,768 (Antoon), 5,254,354 (Stewart), 5,333,394 (Herdeman), 6,433,335 (Raudalus et al.), 5,460,841 (Herdeman), 5.556,658 (Raudalus et al.), 5,658,607 (Herdeman), 6,013,293 (De Moor) and 6,376,032 (Clarke et al), International Publication Nos. WO 94/12040 (Fresh Western) and WO 00/04787 (Landec), and European Patent Applications Nos. 0,351,115 and 0,351,116 (Courtaulds).

The preferred packaging atmosphere for a respiring material often depends on the age of the material and the changes (if any) in the material which are desired. Generally, for example, the preferred O₂ content during storage of unripe fruits is lower than the preferred O₂ content during subsequent ripening at a higher temperature. This fact causes problems for both MAP and CAP. For example, in MAP, although the O₂ permeability of the container generally increases with temperature (especially if it contains an atmosphere control member comprising a crystalline polymer having an appropriate melting point, as disclosed in U.S. Patent No. 6,376,032 and International Publication No. W0 00/04787), the increase is often insufficient to avoid the need for significant compromise between the preferred atmospheres at different stages, In CAP, it is theoretically possible to monitor the packaging atmosphere and to change it as often as is necessary to maintain the preferred level of O₂ (and other gases). But this is difficult and expensive, and often impractical.

For example, US-A- 5 799 495 discloses a system in which biologically respiring material, e.g. fruit, is transported and ripened in a sealed container, and is first surrounded by a first atmosphere and thereafter by a second atmosphere, the second atmosphere containing more oxygen than the first. The atmospheres are controlled by injection of appropriate gases directly into the container

Many fruits are picked when they are unripe; transported and stored under conditions which prevent or retard ripening; and ripen shortly before sale. Many fruits ripen more rapidly when exposed to ethylene, and some (e.g. bananas, tomatoes, avocados, Bartlett pears, kiwis, melons, peppers and mangos) are ripened commercially by exposure to ethylene in ripening rooms. When the fruits have been placed in a sealed bag or other container for transport or storage, the container is opened to expose the fruits to the ethylene. Another problem associated with the use of ripening rooms is that the fruits can ripen too rapidly, especially when the fruits ripen through a climacteric and therefore undergo a very large increase in respiration rate and generate heat in the ripening room.

The present invention relates to a method which is applicable to all respiring biological materials (including but not limited to bananas and other fruits which can be ripened by exposure to ethylene) and is concerned with situations in which the preferred packaging atmosphere has a relatively low O₂ content during one stage and a relatively high O₂ content during another stage.

The method of the invention is a method of treating, e.g. storing and/or ripening, a respiring biological material, the method comprising
(A) providing a sealed package comprising
   (a) a sealed container, and
   (b) within the sealed container, the respiring biological material and a packaging atmosphere around the respiring biological material; the sealed container providing a pathways for O₂ and CO₂ to enter or leave the packaging atmosphere;
(B) exposing the exterior of the sealed package to a first controlled atmosphere;
(C) after step (B), exposing the exterior of the sealed package to a second controlled atmosphere;
the difference between the O₂ contents of the first and second controlled atmospheres being at least 1%, preferably at least 3%.

The term "controlled atmosphere" is used herein to denote any atmosphere whose content is known. Thus, the term includes air and any atmosphere produced by adding known amounts of further gases to an existing controlled atmosphere (including the addition of additional quantities of a gas already present in the existing atmosphere), the further gases being added directly to the atmosphere (i.e. not passing through a permeable body before reaching the atmosphere). For example, a container having a high O₂ permeability can be placed either (i) in air when a packaging atmosphere of high O₂ content is desired, or (ii) in a controlled atmosphere having a selected reduced O₂ content when a packaging atmosphere of low O₂ content is desired.

Some fruits generate ethylene as they ripen. Such ethylene is referred to herein as endogenous ethylene. The term "exogenous ethylene" is used herein to mean ethylene which is not derived from the fruits which are being ripened. Some other materials, for example acetylene, will also assist ripening of fruits which are ripened by exposure to ethylene. Reference may made for example to Burg,et al, Molecular Requirements for the Biological Activity of Ethylene, Plant Physiol (Lancaster) (1967) 42: 144-155. The term "ethylenic ripening agent" is used herein to mean ethylene or another substance which also assists ripening of fruits which can be ripened by exposure to ethylene. The abbreviation ERA is used herein for the term "ethylenic ripening agent". The term "exogenous ERA" is used herein to mean ethylenic ripening agent which is not derived from the fruits which are being ripened.

In one embodiment of the method of the invention I,
(a) in step (B), the first controlled atmosphere has an O₂ content which is (i) less than 18% O₂, preferably less than 12% O₂, particularly less than 9% O₂, and (ii) more than 2% O₂, preferably more than 4% O₂, particularly more than 5% O₂, and
(b) in step (C), the second controlled atmosphere contains at least 3% more O₂ than the first atmosphere.

In another embodiment of the method of the invention,
(a) at the beginning of step (B), the fruits are unripe fruits which ripen when exposed to an ethylenic ripening agent (ERA), for example green bananas;
(b) the O₂ content of the first controlled atmosphere and the permeability of the container are such that the O₂ content of the packaging atmosphere during step (B) is high enough to maintain respiration of the unripe fruits and low enough that the unripe fruits ripen slowly or not at all; and
(c) the second controlled atmosphere contains exogenous ERA, for example exogenous ethylene.

In another embodiment of the method of the invention, the first controlled atmosphere is air, and the second controlled atmosphere contains at least 3% more oxygen than the first atmosphere, and preferably has an O₂ content of at least 24%, particularly at least 28%.

In another embodiment of the method of the invention,
(a) at the beginning of step (B), the fruits are unripe fruits which can be ripened by exposure to ethylene, for example green bananas;
(b) the sealed container contains a latent source of exogenous ERA;
(c) at least the initial part of step (B) is carried out under conditions such that ERA is not released from the latent source; and
(c) during or after step (B), the latent source of exogenous ERA is activated, thereby releasing exogenous ERA which ripens the fruits.

In another embodiment of the method of the invention,
(a) at the beginning of step (B), the fruits are unripe fruits which can be ripened by exposure to ethylene, for example green bananas;
(b) during at least part of step (B), the first controlled atmosphere contains at least 23% O₂, preferably 25-30% O₂, e.g. about 28% O₂, and exogenous ERA, for example at least 20 ppm, e.g. 100 to 3000 ppm, of ethylene; and
(c) during at least part of step (C), the second controlled atmosphere contains 18 to 22% O₂, for example is air.

In this embodiment, the O₂ content of the packaging atmosphere can be, for example, 4 to 8%, preferably 5.5 to 6.5%, during at least part of step (B), and 2 to 4%, preferably 2.5 to 3.5%, during at least part of step (C).

In another embodiment of the method of the invention,
(a) the second controlled atmosphere contains (i) less than 18% O₂, preferably less than 12% O₂, particularly less than 9% O₂, and (ii) more than 2% O₂, preferably more than 4% O₂, particularly more than 5% O₂; and
(b) has an O₂ permeability such that, during at least one period of step (B), the O₂ content of the packaging atmosphere reaches a value which is (i) more than 1 %, preferably more than 2%, and (ii) less than 7%, preferably less than 5%, particularly less than 3.5%.

A container system which is suitable for carrying out the method of the invention or which has been used to carry out the method of the invention, comprises
(1) a sealed enclosure, for example a shipping or trucking container or a ripening room, having an inlet port;
(2) within the enclosure, a plurality of sealed packages as defined in paragraph (A) of the method of the invention;;
(3) a source of O₂ connected to the inlet port, whereby the sealed packages can be surrounded by a controlled atmosphere having a desired O₂ content; and
(4) a source of exogenous ethylenic ripening agent connected to the second inlet port;
whereby the sealed packages can be surrounded by a controlled atmosphere having a desired O₂ content. This system is particularly useful for the transport and/or storage and/or ripening of bananas.

The container preferably includes at least one atmosphere control member which provides a pathway for O₂ and CO₂ to enter or leave the packaging atmosphere and which comprises a gas-permeable membrane comprising (i) a microporous polymeric film, and (ii) a polymeric coating on the microporous film. However, the container can be one which does not include an atmosphere control member, for example a polyethylene bag of the kind conventionally used for shipping bananas, whose O₂ permeability is too small to permit satisfactory ripening in a conventional ripening room.

The sealed container optionally has an O₂ permeability at 13 °C, per kg of fruits in the container (OP13/kg), of at least 700, preferably at least 1000, particularly at least 1500, ml/atm.24 hrs and an R ratio at 13°C of at least 1.3, preferably at least 2, more preferably at least 3.

When the sealed package contains unripe fruits which can be ripened by exposure to ethylene, it is preferred that
(A) the sealed enclosure includes a second inlet port and a source of exogenous ERA connected to the second inlet port, and/or
(B) within the sealed enclosure, there is a latent source of exogenous ERA, or a source of exogenous ERA, or the residue of a source of exogenous ERA.

In either case, the container preferably has an ERA permeability at 13 °C, per kg of fruits in the container (ERAP13/kg) which is at least 2 times, preferably least 3 times, more preferably at least 4 times, the OP13/kg of the container. In one embodiment, the fruits are unripe fruits which ripen through a climacteric, and have not yet reached their climacteric; and the packaging atmosphere contains at least 0.8%, preferably 1.5 to 6%, especially 1.5 to 3%, of O₂, and less than 15%, preferably less than 7%, of CO₂, with the total quantity of O₂ and CO₂ being less than 16%, preferably less than 10 %, at least 10%, whereby the fruits are maintained in an unripe state. In another embodiment, the fruits are unripe fruits which ripen through a climacteric, and have reached their climacteric; and the packaging atmosphere contains at least 12%, particularly 14 to 19%, of O₂, and less than 14%, preferably less than 4%, of CO₂, with the total quantity of O₂ and CO₂ being less than 20 %, preferably less than 17%. The sealed container may for example contain at least 4 kg, preferably least 15 kg, especially 16 to 22 kg, of fruits,

In the method of the invention, step (B) and/ or step (C) can comprise placing the sealed package in an atmosphere containing ERA, for example in a ripening room containing ethylene, preferably in amount at least 20 ppm, for example 300 to 1000 ppm, for example at a temperature less than 22°C, preferably less than 20 °C, for example at 16-21 °C.

### DETAILED DESCRIPTION OF THE INVENTION

In the summaries of the invention above and in this Detailed Description of the Invention, the Example, and the Claims below, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the invention generally.

The term "comprises" and grammatical equivalents thereof are used herein to mean that other components, ingredients, steps etc. are optionally present. For example, an article "comprising" (or "which comprises") components A, B and C can consist of (i.e. contain only) components A, B and C, or can contain not only components A, B and C but also one or more other components. Where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility). The term "at least" followed by a number is used herein to denote the start of a range beginning with that number (which may be a range having an upper limit or no upper limit, depending on the variable being defined). For example "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40 %. When, in this specification, a range is given as " (a first number) to (a second number)" or "(a first number) - (a second number)", this means a range whose lower limit is the first number and whose upper limit is the second number. For example, 25-100 mm means a range whose lower limit is 25 mm, and whose upper limit is 100 mm.

In describing and claiming the invention below, the following abbreviations, definitions, and methods of measurement (in addition to those already given) are used. OTR is O₂ permeability. COTR is CO₂ permeability. EtTR is ethylene transmission rate. ERATR is ERA transmission rate. OTR, COTR, EtTR and ERATR values are given in ml/m².atm.24 hrs; in some cases, the equivalent in cc/100 inch².atm.24 hrs is given in parentheses. OTR and COTR values referred to herein can be measured using a permeability cell (supplied by Millipore) in which a mixture of O₂, CO₂ and helium is applied to the sample, using a pressure of 0.7 kg/cm² (10 psi) except where otherwise noted, and the gases passing through the sample were analyzed for O₂ and CO₂ by a gas chromatograph. The cell could be placed in a water bath to control the temperature. The abbreviation P₁₀ is used to mean the ratio of the oxygen permeability at a first temperature T₁°C to the oxygen permeability at a second temperature T₂, where T₂ is (T₁-10)°C. T₁ being 10°C and T₂ being 0 °C unless otherwise noted. The abbreviation R or R ratio is used to mean the ratio of CO₂ permeability to O₂ permeability, both permeabilities being measured at 20°C unless otherwise noted. Pore sizes given in this specification are measured by mercury porosimetry or an equivalent procedure. Parts and percentages are by weight, except for percentages of gases, which are by volume; temperatures are in degrees Centigrade, and molecular weights are weight average molecular weights expressed in Daltons. For crystalline polymers, the abbreviation Tₒ is used to mean the onset of melting, the abbreviation Tₚ is used to mean the crystalline melting point, and the abbreviation ΔH is used to mean the heat of fusion. Tₒ, Tₚ and ΔH are measured by means of a differential scanning calorimeter (DSC) at a rate of 10°C/minute and on the second heating cycle. Tₒ and Tₚ are measured in the conventional way well known to those skilled in the art. Thus Tₚ is the temperature at the peak of the DSC curve, and Tₒ is the temperature at the intersection of the baseline of the DSC peak and the onset line, the onset line being defined as the tangent to the steepest part of the DSC curve below Tₚ.

The term "enclosure" is used herein to mean a large container (for example a conventional shipping or trucking container, or a conventional ripening room) which is sealed sufficiently to permit a controlled atmosphere to be maintained therein by conventional means well known to those skilled in the art. The term "shipping or trucking container" is used herein to mean a container which has a volume of at least 8 m³ and which can be loaded onto a ship or a truck. Such containers are well known to those skilled in the art of storing and transporting fruits and vegetables, and are available in a range of standard sizes. The term "source of exogenous ERA" is used herein to mean a material, object or system which, either immediately or when activated, generates ethylenic ripening agent. The term "latent source of exogenous ERA" is used herein to mean a material, object or system which is generating little or no ERA, but which can be activated so that it generates substantial quantities of exogenous ERA. The term "residue of a source of exogenous ERA" is used herein to mean a material, object or system which is not a part of a fruit and which remains after exogenous ERA has been generated from a source of exogenous ERA. The residue may be for example (i) a solid material which served as a support for exogenous ERA itself or for one or more precursors of exogenous ERA, or (ii) a liquid residue remaining after a solution of a precursor for an ERA, e.g. 2-chloroethyl phosphonic acid, has been used to generate exogenous ethylene and/or a solid residue resulting from the evaporation of solvent from such a solution. The term "residue of exogenous ERA" is used herein to denote a chemical compound which results from the reaction of exogenous ERA with the fruit being ripened (in which case it is optionally part of the ripe fruit) or with another substance within the sealed package. The term "ripening" is used herein to mean increasing ripeness; it includes, but is not limited to and generally does not mean, ripening to a point which results in a product which in a retail store would be sold as "ripe". When applied to fruits which ripen through a climacteric, the term "ripening" means ripening the fruits at least through the climacteric. The term "unripe fruits" is used herein to mean fruits which require ripening before they can be sold in retail stores. When applied to fruits which ripen through a climacteric, the term "unripe fruits" means fruits which have not reached their climacteric. The term "banana" is used herein to include plantains.

Where reference is made herein to sealed packages and sealed containers, and to sealing bags and other containers containing biological materials, it is to be understood that the sealing can be, but generally is not, hermetic sealing. Conventional methods for sealing bags and other containers can conveniently be used in this invention. Such conventional methods include, for example, the use of a cable tie to seal the neck of a polymeric bag. A seal made by conventional methods often is not a hermetic seal, and has the advantage that it permits equilibration of the pressures inside and outside the bag. If the container is sealed hermetically, it will generally be desirable to include one or more pinholes in the container, to achieve such equilibration. The less complete the sealing of the container, the less the influence of the permeability of the container on the packaging atmosphere within it. Thus, even a poor seal may be sufficient, or even desirable, for example when the desired O₂ content of the packaging atmosphere lies between the O₂ content of the atmosphere surrounding the package and the O₂ content of the packaging atmosphere that would result if the seal was a hermetic seal. Under such circumstances, the sealing could be designed to permit a controlled amount of direct exchange between the packaging atmosphere and the atmosphere surrounding the container.

### Control Members

The containers used in the present invention preferably, but not necessarily, include at least one atmosphere control member which provides a pathway for O₂ and CO₂, and which preferably comprises a gas-permeable membrane comprising
(1) a microporous polymeric film, and
(2) a polymeric coating on the microporous film.
The atmosphere control member is preferably a control member as described in one or more of U.S. Patent Nos. 6,013,293 and 6,376,03 and international Publication No. W0 00/04787. The atmosphere control member or members generally provide at least 50%, preferably at least 75%, of the O₂ permeability of the sealed container.

The microporous polymeric film preferably comprises a network of interconnected pores having an average pore size of less than 0.24 micron, with at least 70% of the pores having a pore size of less than 0.24 micron and at least 80% of the pores having a pore size less than 0.15 micron. Preferably the pores in the microporous film constitute 35 to 80% by volume of the microporous film.

In some embodiments, the polymeric coating on the control member preferably comprises a crystalline polymer having a peak melting temperature Tₚ of -5 to 40 °C., e.g. 0 to 15°C. or 10 to 20°C., an onset of melting temperature Tₒ such that (Tₚ - Tₒ) is less than 10°C., and a heat of fusion of at least 5 J/g. The polymer preferably comprises a side chain crystalline polymer moiety comprising, and optionally consisting of, units derived from (i) at least one n-alkyl acrylate or methacrylate (or equivalent monomer, for example an amide) in which the n-alkyl group contains at least 12 carbon atoms, for example in amount 35-100%, preferably 50-100%, often 80-100%, and optionally (ii) one or more comonomers selected from acrylic acid, methacrylic acid, and esters of acrylic or methacrylic acid in which the esterifying group contains less than 10 carbon atoms. The preferred number of carbon atoms in the alkyl group of the units derived from (i) depends upon the desired melting point of the polymer. For the packaging of biological materials, it is often preferred to use a polymer having a relatively low melting point, for example a polymer in which the alkyl groups in the units derived from (i) contain 12 and/or 14 carbon atoms. The polymer can be a block copolymer in which one of blocks is a crystalline polymer as defined and the other block(s) is crystalline or amorphous. Preferred block copolymers comprise (i) polysiloxane polymeric blocks, and (ii) crystalline polymeric blocks having a Tₚ of -5 to 40°C. Such polymers are described in International Publication No. W0 00/24787.

Other polymers which can be used to coat the microporous film include cis-polybutadiene, poly (4-methylpentene), polydimethyl siloxane, and ethylene-propylene rubber.

The gas-permeable membrane preferably has one or more of the following properties
(i) a P₁₀ ratio, over at least one 10 °C range between -5 and 15°C or between 10 and 20 °C. of at least 2.0 to 2.8;
(ii) an OTR at all temperatures between 20 and 25°C of 2,480,000 to 7,000,000 ml/m².atm.24 hr. (160,000 to 450,000 cc/100 in².atm.24hr); and
(iii) an R ratio of at least 1.3, preferably 2.0, particularly at least 3.0, especially at least 3.5.

The O₂ permeability of the container at 13°C per kilogram of fruits therein (OP13/kg) is preferably at least 700, particularly have least 1000, especially at least 1500, ml/.atm.24hrs. The R ratio of the container at 13°C is preferably at least 1.3, more preferably at least 2, particularly at least 3. The ERA permeability of the container at 13°C per kilogram of fruits therein (ERAP13/kg) is preferably at least 3 times, particularly at least 4 times, the OP13/kg of the container.

The permeability of the container, whether or not it includes an atmosphere control member, can be influenced by perforating the container in order to make a plurality of pinholes therein.

### Fruits

This invention is particularly useful for (but is not limited to) the ripening and/or storage of the wide range of fruits which ripen (or undergo other changes, for example, in the case of citrus fruits, de-greening) when exposed to ethylene or another ERA, for example apples, apricots, avocados, bananas, blueberries, cherimoyas, dates, figs, kiwis, mangos, melons, peaches, papayas, pears, peppers, persimmons, and plums (all of which go through a climacteric when they ripen), as well as cherries, grapes, lemons, oranges, tomatoes and strawberries. Some aspects of the invention are especially useful for fruits which in commercial practice are ripened in ethylene-containing ripening rooms, for example avocados, bananas, Bartlett pears, kiwis, mangos, melons, peppers and tomatoes. To Storage of unripe fruits

When the invention is being used to store unripe fruits, it is possible to produce desired packaging atmospheres by the selection of containers which, when sealed around the quantities of fruits in question at the selected storage temperature, have appropriate permeabilities to O₂ and CO₂, and by the selection of an appropriate controlled atmosphere around the sealed packages. Those skilled in the art will have no difficulty, having regard to their own knowledge and the contents of this specification, in making appropriate selections to produce a desired packaging atmosphere or to make a desired compromise between (i) the cost and inconvenience of obtaining an entirely satisfactory combination of container and controlled atmosphere, and (ii) the disadvantage of storing the fruits in a packaging atmosphere which is in some ways unsatisfactory.

The table below sets out, for some of the fruits for which this invention is useful, ranges for the concentrations of O₂ and CO₂ which may be used during storage. The invention is, however, useful, for storing these and other fruits outside the ranges stated in the table below.

| Fruit | O₂ content | CO₂ content |
|---|---|---|
| Banana | 2-5% | 3-7% |
| Tomato | 3-5% | 2-3% |
| Kiwi, nectarine, peach | 1-2% | 3-5% |
| Fig, blackberry, blueberry, raspberry, strawberry | 5-10% | 15-20% |
| Mango, papaya, pineapple | 3-5% | 5-8% |
| Avocado | 2-5% | 3-10% |

## Claims

1. A method of treating a respiring biological material, the method comprising
(A) providing a sealed package comprising
(a) a sealed container, and
(b) within the sealed container, the respiring biological material and a packaging atmosphere around the respiring biological material;
the sealed container providing a pathway for O₂ and CO₂ to enter or leave the packaging atmosphere;
(B) exposing the exterior of the sealed package to a first controlled atmosphere;
(C) after step (B), exposing the exterior of the sealed package to a second controlled atmosphere;
the difference between the O₂ contents of the first and second controlled atmospheres being at least 1%.

2. A method according to Claim 1 wherein one of the first and second controlled atmospheres is air.

3. A method according to claim 1 or 2 wherein the biological material is within a plurality of sealed packages, and the plurality of sealed packages are within a sealed shipping or trucking container having an inlet port connected to a source of oxygen.

4. A method according to any one of claims 1 to 3 wherein
(a) at the beginning of step (B), the fruits are green bananas,
(b) the O₂ content of the first controlled atmosphere and the permeability of the container are such that the O₂ content of the packaging atmosphere during step (B) is high enough to maintain respiration of the green bananas and low enough that the green bananas ripen slowly or not at all; and
(c) the second controlled atmosphere contains exogenous ethylene ripening agent.

5. A method according to any one of claims 1 to 3 wherein
(a) at the beginning of step (B), the fruits are green bananas;
(b) during at least part of step (B), the first controlled atmosphere contains at least 23% O₂-and at least 20 ppm of ethylene; and
(c) during at least part of step (C), the second controlled atmosphere is air.

6. A method according to Claim 5 wherein the O₂ content of the packaging atmosphere is 4 to 8% during at least part of step (B), and 2 to 4% during at least part of step (C).

7. A method according to any one of claims 1 to 6 wherein the sealed container consists essentially of a polyethylene bag,

8. A method according to any one of claims 1 to 6 wherein the container includes at least one atmosphere control member which provides a pathway for O₂ and CO₂ to enter or leave the packaging atmosphere and which comprises a gas-permeable membrane comprising
(i) a microporous polymeric film, and
(ii) a polymeric coating on the microporous film.

9. A method according to any one of Claims 6 to 8 wherein
(a) the second controlled atmosphere contains 2-18% O₂; and
(b) the sealed container has an O₂ permeability such that, during at least one period of step (B), the O₂ content of the packaging atmosphere is 2-7%.

10. A container system suitable for carrying out the method of any one of claims 1 to 9, or which has been used to carry out the method of any one of claims 1 to 9, the system comprising
(1) a sealed enclosure having a first inlet port and a second inlet port;
(2) within the enclosure, a plurality of sealed packages, each of which comprises
(a) a sealed container, and
(b) within the sealed container, a respiring biological material and a packaging atmosphere around the respiring biological material,
the sealed container providing a pathway for O₂ and CO₂ to enter or leave the packaging atmosphere;
(3) a source of O₂ connected to the first inlet port, and
(4) a source of exogenous ethylenic ripening agent connected to the second inlet port;
whereby the sealed packages can be surrounded by a controlled atmosphere having a desired O₂ content.

11. A container system according to claim 10 wherein the enclosure is a shipping or trucking container which has a volume of at least 8 m³ and which can be loaded onto a ship or a truck.

## Patentansprüche

1. Verfahren zur Behandlung eines Respiration betreibenden biologischen Materials, bei dem man
(A) eine verschlossene Packung bereitstellt, die
(a) einen verschlossenen Behälter und
(b) in dem verschlossenen Behälter das Respiration betreibende biologische Material und eine Pakkungsatmosphäre um das Respiration betreibende biologische Material herum aufweist,
wobei der verschlossene Behälter einen Weg für O₂ und CO₂ zum Eintreten in die Packungsatmosphäre oder Verlassen der Packungsatmosphäre bereitstellt,
(B) die Außenseite der verschlossenen Packung einer ersten kontrollierten Atmosphäre aussetzt,
(C) nach Schritt (B) die Außenseite der verschlossenen Packung einer zweiten kontrollierten Atmosphäre aussetzt,
wobei die Differenz zwischen den O₂-Gehalten der ersten und der zweiten kontrollierten Atmosphäre mindestens 1% beträgt.

2. Verfahren nach Anspruch 1, bei dem eine der ersten und der zweiten kontrollierten Atmosphäre Luft ist.

3. Verfahren nach Anspruch 1 oder 2, bei dem sich das biologische Material in einer Vielzahl verschlossener Packungen befindet und sich die Vielzahl verschlossener Packungen in einem verschlossenen Transport- oder Straßentransportbehälter befindet, der eine mit einer Sauerstoffquelle verbundene Einlaßöffnung aufweist.

4. Verfahren nach einem der Ansprüche 1 bis 3, bei dem
(a) am Beginn von Schritt (B) die Früchte grüne Bananen sind,
(b) der O₂-Gehalt der ersten kontrollierten Atmosphäre und die Permeabilität des Behälters derart sind, daß der O₂Gehalt der Packungsatmosphäre während Schritt (B) hoch genug ist, um die Respiration der grünen Bananen aufrecht zu erhalten, und niedrig genug, daß die grünen Bananen langsam oder überhaupt nicht reifen, und
(c) die zweite kontrollierte Atmosphäre exogenes Ethylen-Reifungsmittel enthält.

5. Verfahren nach einem der Ansprüche 1 bis 3, bei dem
(a) am Beginn von Schritt (B) die Früchte grüne Bananen sind,
(b) während zumindest eines Teils von Schritt (B) die erste kontrollierte Atmosphäre mindestens 23% O₂ und mindestens 20 ppm Ethylen enthält und
(c) während zumindest eines Teils von Schritt (C) die zweite kontrollierte Atmosphäre Luft ist.

6. Verfahren nach Anspruch 5, bei dem der O₂Gehalt der Pakkungsatmosphäre während zumindest eines Teils von Schritt (B) 4 bis 8% und während zumindest eines Teils von Schritt (C) 2 bis 4% beträgt.

7. Verfahren nach einem der Ansprüche 1 bis 6, bei dem der verschlossene Behälter im wesentlichen aus einem Polyethylen-Beutel besteht.

8. Verfahren nach einem der Ansprüche 1 bis 6, bei dem der Behälter mindestens ein Atmosphären-Steuerelement enthält, das einen Weg für O₂ und CO₂ zum Eintreten in die Pakkungsatmosphäre oder Verlassen der Packungsatmosphäre bereitstellt und das eine gaspermeable Membran aufweist, die
(i) eine mikroporöse polymere Folie und
(ii) eine polymere Beschichtung auf der mikroporösen Folie aufweist.

9. Verfahren nach einem der Ansprüche 6 bis 8, bei dem
(a) die zweite kontrollierte Atmosphäre 2 bis 18% O₂ enthält und
(b) der verschlossene Behälter eine derartige O₂-Permeabilität aufweist, daß während mindestens eines Zeitraums von Schritt (B) der O₂-Gehalt der Packungsatmosphäre 2 bis 7% beträgt.

10. Behältersystem, das zur Ausführung des Verfahrens nach einem der Ansprüche 1 bis 9 geeignet ist oder das verwendet worden ist, um das Verfahren nach einem der Ansprüche 1 bis 9 auszuführen, wobei das System
(1) ein verschlossenes Gehäuse mit einer ersten Einlaßöffnung und einer zweiten Einlaßöffnung,
(2) in dem Gehäuse eine Vielzahl verschlossener Packungen, von denen jede
(a) einen verschlossenen Behälter und
(b) in dem verschlossenen Behälter ein Respiration betreibendes biologisches Material und eine Pakkungsatmosphäre um das Respiration betreibende biologische Material herum aufweist,
wobei der verschlossene Behälter einen Weg für O₂ und CO₂ zum Eintreten in die Packungsatmosphäre oder Verlassen der Packungsatmosphäre bereitstellt,
(3) eine mit der ersten Einlaßöffnung verbundene O₂-Quelle und
(4) eine mit der zweiten Einlaßöffnung verbundene Quelle für exogenes Ethylen-Reifungsmittel aufweist,
wobei die verschlossenen Packungen von einer kontrollierten Atmosphäre mit einem gewünschten O₂-Gehalt umgeben sein können.

11. Behältersystem nach Anspruch 10, bei dem das Gehäuse ein Transport- oder Straßentransportcontainer ist, der ein Volumen von mindestens 8 m³ hat und der auf ein Schiff oder einen Lastkraftwagen geladen werden kann.

## Revendications

1. - Procédé de traitement d'un matériel biologique respirant, le procédé comprenant:
(A) se procurer un conditionnement scellé comprenant :
(a) un conteneur scellé ; et
(b) à l'intérieur du conteneur scellé, le matériel biologique respirant et une atmosphère de conditionnement autour du matériel biologique respirant ;
le conteneur scellé fournissant un passage pour que O₂ et CO₂ entrent dans ou quittent l'atmosphère de conditionnement ;
(B) exposer l'extérieur du conditionnement scellé à une première atmosphère contrôlée ;
(C) après l'étape (B), exposer l'extérieur du conditionnement scellé à une seconde atmosphère contrôlée ;
la différence entre les teneurs en O₂ des première et seconde atmosphères contrôlées étant d'au moins 1%.

2. - Procédé selon la revendication 1, dans lequel l'une des première et seconde atmosphères contrôlées est l'air.

3. - Procédé selon l'une des revendications 1 ou 2, dans lequel le matériel biologique est à l'intérieur d'une pluralité de conditionnements scellés, et les différents conditionnements scellés sont à l'intérieur d'un conteneur scellé de transport par bateau ou par camion ayant un orifice d'entrée connecté à une source d'oxygène.

4. - Procédé selon l'une quelconque des revendications 1 à 3, dans lequel :
(a) au début de l'étape (B), les fruits sont des bananes vertes ;
(b) la teneur en O₂ de la première atmosphère contrôlée et la perméabilité du conteneur sont telles que la teneur en O₂ de l'atmosphère de conditionnement pendant l'étape (B) est suffisamment élevée pour maintenir la respiration des bananes vertes et suffisamment faible pour que les bananes vertes mûrissent lentement ou pas du tout ; et
(c) la seconde atmosphère contrôlée contient de l'éthylène exogène comme agent de maturation,.

5. - Procédé selon l'une quelconque des revendications 1 à 3, dans lequel:
(a) au début de l'étape (B), les fruits sont des bananes vertes ;
(b) pendant au moins une partie de l'étape (B), la première atmosphère contrôlée contient au moins 23% d'O₂ et au moins 20 ppm d'éthylène ; et
(c) pendant au moins une partie de l'étape (C), la seconde atmosphère contrôlée est l'air.

6. - Procédé selon la revendication 5, dans lequel la teneur en O₂ de l'atmosphère de conditionnement est de 4 à 8% pendant au moins une partie de l'étape (B), et de 2 à 4% pendant au moins une partie de l'étape (C).

7. - Procédé selon l'une quelconque des revendications 1 à 6, dans lequel le conteneur scellé est constitué essentiellement d'un sac de polyéthylène.

8. - Procédé selon l'une quelconque des revendications 1 à 6, dans lequel le conteneur comprend au moins un élément de contrôle de l'atmosphère qui fournit un passage pour que O₂ et CO₂ entrent dans ou quittent l'atmosphère de conditionnement et qui comprend une membrane perméable aux gaz comprenant :
(i) un film polymère microporeux ; et
(ii) un revêtement polymère sur le film microporeux.

9. - Procédé selon l'une quelconque des revendications 6 à 8, dans lequel :
(a) la seconde atmosphère contrôlée contient 2-18% d'O₂ ; et
(b) le conteneur scellé a une perméabilité à O₂ telle que, pendant au moins une période de l'étape (B), la teneur en O₂ de l'atmosphère de conditionnement est 2-7%.

10. - Système de conteneur approprié pour la mise en oeuvre du procédé de l'une quelconque des revendications 1 à 9, ou qui a été utilisé pour mettre en oeuvre le procédé de l'une quelconque des revendications 1 à 9, le système comprenant:
(1) une enceinte scellée ayant un premier orifice d'entrée et un second orifice d'entrée ;
(2) à l'intérieur de l'enceinte, une pluralité de conditionnements scellés, dont chacun comprend :
(a) un conteneur scellé ; et
(b) à l'intérieur du conteneur scellé, un matériel biologique respirant et une atmosphère de conditionnement autour du matériel biologique respirant ;
le conteneur scellé fournissant un passage pour que O₂ et CO₂ entrent dans ou quittent l'atmosphère de conditionnement ;
(3) une source d'O₂ connectée au premier orifice d'entrée ; et
(4) une source d'agent de maturation éthylénique exogène connectée au second orifice d'entrée ;
ce par quoi les conditionnements scellés peuvent être entourés par une atmosphère contrôlée ayant une teneur en O₂ désirée.

11. - Système de conteneur selon la revendication 10, dans lequel l'enceinte est un conteneur de transport par bateau ou par camion qui a un volume d'au moins 8 m³ et qui peut être chargé sur un bateau ou un camion.
